# EUROPEAN PATENT SPECIFICATION

(11) **EP 0 745 499 B1**
(45) Date of publication and mention of the grant of the patent: **11.07.2001**
(21) Application number: 96303724.7
(22) Date of filing: 24.05.1996
(51) Int. Cl.: B60K 15/035

(54) **Gas dispenser**
Gasabgabeeinrichtung
Distributeur de gaz

(30) Priority: 01.06.1995 GB 9511100
(43) Date of publication of application: 04.12.1996
(73) Proprietor: The BOC Group plc, Windlesham Surrey GU20 6HJ (GB)
(72) Inventor: Garrett, Michael Ernest, Woking, Surrey, GU22 7XR (GB)
(74) Representative: Gough, Peter

(56) References cited:
- DE-U- 8 702 074
- US-A- 3 918 932
- US-A- 4 406 129
- US-A- 5 021 071
- US-A- 5 377 723

## Description

The present invention relates to an apparatus for the storage and dispensing of liquid gas and relates more particularly to such an apparatus for use with liquid fuel gas in motor vehicles and the like.

Liquified natural gas (LNG) is well known for use as a fuel for vehicles but its use raises a number of problems associated with boil-off of gas and the provision of a start-up capability whenever the vehicle has been parked for a long period of time and most, if not all, the LNG has vaporised.

LNG is an attractive fuel for vehicles because of its low polluting properties, its density compared to compressed natural gas and its ease of transfer from a storage vessel to a vehicle. Many problems relating to the use of LNG have now been overcome, but many still remain. For example, liquified natural gas which is a largely methane boils at about -170°C and cannot be maintained as a liquid by pressure alone, this means that heat leak will eventually cause pressure in excess of 700 atmospheres to build up in a container vessel. Such pressures are unacceptable from a safety point of view and are also well beyond that manageable by today's engineering technology. Normally, these liquids are kept in vacuum insulated tanks and the boil-off gas is allowed to escape at a fairly Jow pressure to the atmosphere - as, for example, in US Application 4406129. When in use, the fuel consumed will normally exceed the boil-off rate and further liquid will be vaporised to supply the engine. However, if the vehicle is left parked with the engine switched off then the heat leak will slowly vaporise the liquid and, if this is vented into an enclosed space, then there is a risk of an explosive mixture forming with air.

It is an object of the present invention to provide a system for storing and dispensing liquified natural gas and the like to a vehicle engine which reduces and possibly eliminates the problems associated with the above-mentioned arrangements.

Accordingly, the present invention provides an apparatus for storing an apparatus for use on a vehicle for storing and dispensing a combustible liquid gas comprising a storage tank having an inlet for receiving liquid gas, an outlet for allowing liquid gas to be drawn from said tank, and a vent pipe for allowing excess vaporised gas to be withdrawn from said tank, characterised in that said vent pipe includes means for oxidising any vented gas into carbon dioxide and water, thereby to prevent vaporised gas being released to atmosphere, and in that the apparatus further comprises an adsorbent filled supplementary storage vessel and means for directing vaporised gas initially to said vessel for adsorption by the adsorbent therein, a vaporiser for vaporising liquid gas and a gas supply pipe for directing gas vaporised by the vaporiser to a unit in which it is to be combusted, and an auxiliary supply pipe for directing vaporised liquid gas from the supplementary storage vessel to the gas supply pipe downstream of the vaporiser.

Advantageously, the oxidising means comprises a catalytic converter.

Preferably, the apparatus further includes a pressure relief valve for preventing vaporised gas being passed to said oxidising unit below a predetermined pressure.

Preferably, the adsorbent comprises a high surface area activated carbon or zeolite.

Advantageously, the catalytic convertor comprises a platinum or platinum/palladium converter.

Conveniently, the outlet is positioned for directing gas to an internal combustion engine of a vehicle.

The present invention will now be more particularly described by way of example only with reference to the accompanying drawings in which:
Figure 1 is a diagrammatic representation of a vehicle incorporating an apparatus according to the present invention; and
Figure 2 is a schematic representation of an apparatus according to the present invention.

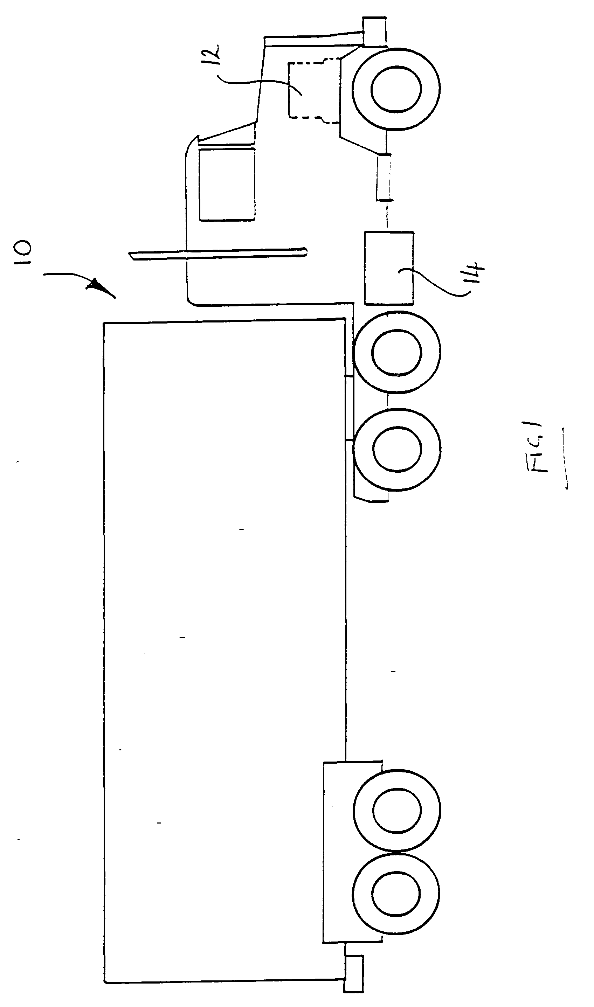

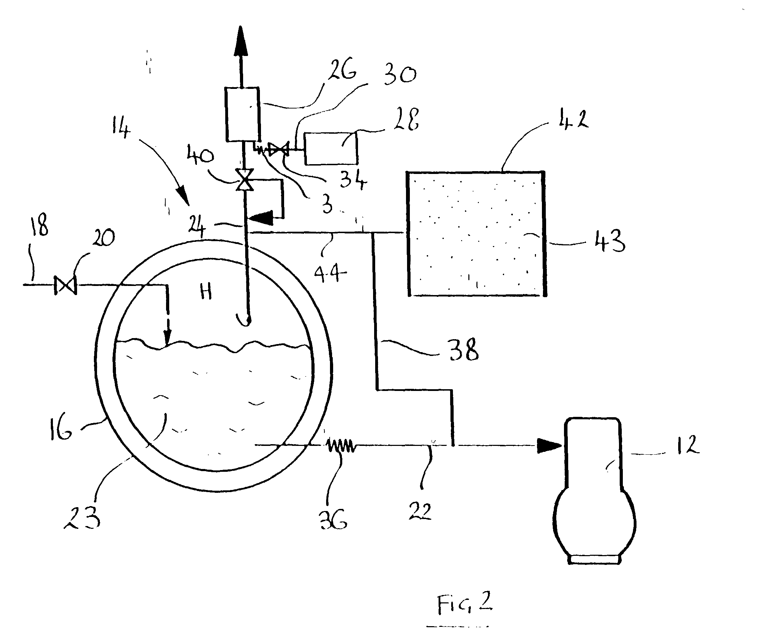

Referring briefly to Figure 1, a vehicle, such as lorry 10, includes an engine 12 and an apparatus for storing and dispensing a combustible liquified gas 14. best seen in Figure 2. From Figure 2, it will be appreciated that the apparatus 14 includes an insulated storage tank 16 having a filling point 18 incorporating valve 20 and a supply pipe 22 for supplying fuel 23 to a combustion unit in the form of. for example, internal combustion engine 12. Additional to these tank features is a vent pipe 24 positioned towards the top of tank 16 and for allowing excess vaporised gas to be withdrawn from the tank, thereby avoiding the problems associated with excessive pressure buildup. The vent pipe 24 further includes a catalytic convertor 26 for oxidising any vent gas into carbon dioxide and water, thereby to prevent vaporised gas being released to atmosphere. The operation and form of suitable catalytic convertors will be well known in the art and, as they form no major part of the present invention are therefore not described in detail herein. However, it will be appreciated that such convertors may comprise an oxidation catalyst and are used to promote chemical reactions in the vent gas so as to facilitate conversion of the vent gas to H₂O and CO₂ which maybe safely released to atmosphere. The converter may comprise a platinum or platinum/palladium convertor which promotes oxidation of any HC to H₂O and CO₂ by reaction with excess oxygen. In view of the requirement for excess oxygen, the apparatus further includes a supply of oxygen in the form of, for example, a liquid oxygen storage tank 28 and supply means in the form of pipe 30, vaporiser 32 and control valve 34 for facilitating the supply of vaporised O₂ to the catalytic convertor 26 as and when required. Alternatively, natural air could be circulated to the catalyst via a fan and ducting arrangement (not shown). Once reacted, the converted gas may be released to atmosphere without danger.

The supply pipe 22 is provided with a vaporiser in the form of, for example, vaporisation coil 36 so as to vaporise liquid gas before it is supplied to engine 12 and is further provided with auxiliary supply pipe 38 for receiving boil-off gas which might otherwise be directed to catalytic convertor 26. Such an arrangement is even more practical when the vent pipe 24 is provided with a pressure actuated valve 40 operable to allow the passage of boil-off gas only at or above a predetermined pressure.

Also included in the apparatus of the present invention is a supplementary storage vessel 42 linked via pipe 44 to the vent for receiving at least a portion of the boil-off gas from storage tank 16. This supplementary vessel 42 is filled with an adsorbent such as. a high surface area activated carbon or zeolite sieve 43 which has the ability to store a large volume of vented gas by adsorption. Whilst it will be possible to adsorb at atmospheric pressure, it would be particularly beneficial to combine vessel 42 with pressure actuated valve 40 which vents the tank and hence also vessel 42 only after a pressure of say 10 bar has been reached. With such an arrangement, it would be relatively easy to provide enough storage volume to retain 10-20% of the total fuel tank capacity. If a vehicle were to be parked with a tank with less than this volume of unused fuel then there would be no loss over even a prolonged period of parking. Any fuel in excess of this volume would be selectively vented through the catalytic convertor leaving the reserve of up to 20% as described.

In operation, the tank 16 is charged with liquid fuel via filling point 18 and valve 20 which is securely closed after filling. Upon initial startup, liquid fuel is drawn through supply pipe 22 and vaporised in coil 36 before being supplied to the vehicle engine for consumption thereby. As the liquid fuel vaporises within tank 16 it starts to pressurise the headspace H and then enters vent pipe 24 for supply to the catalytic convertor 26 and/or supplementary vessel 42 (if provided). If no supplementary vessel 42 is employed, vaporised fuel is passed directly to catalytic convertor 26 in which it undergoes a chemical reaction in the presence of excess oxygen and is converted to H₂O and CO₂. These elements (H₂O. CO₂) may be released to atmosphere in any conventional manner and are. in effect, non-damaging. The amount of heat created during reaction is fairly low and has minimal impact on the temperature of the air surrounding the vehicle. In the event that a pressure control valve 40 is employed, the catalytic convertor 26 receives no gas until a predetermined pressure has been exceeded.

If a supplementary vessel 42 is employed, vaporised fuel may be directed thereto via pipe 44 such that it is adsorbed by adsorbent 43 and stored for subsequent use. Whilst it will be possible to adsorb at atmospheric pressure or the pressure created through vaporisation of the liquid gas, such adsorption is more preferably undertaken at elevated pressures as adsorbents 43 are, generally, more efficient at elevated pressures. Clearly, pressure valve 40 may be employed to create the desired pressure and to ensure that all vaporised gas is directed to vessel 42 until the set pressure is exceeded and gas is directed to catalytic convertor 26 for conversion in the usual manner. If the pressure of the vaporised gas exceeds that required for engine 12, then auxiliary supply pipe 38 acts to direct gas to the engine rather than vessel 42 or convertor 26.

Whenever the vehicle 10 is parked without the engine running, vaporised gas is either vented directly to atmosphere via convertor 26 or stored in supplementary vessel 42. In the event that the vehicle 10 is parked for a prolonged period of time and all the liquid gas 23 in tank 16 is vaporised, the quantity of adsorbed gas present in vessel 42 is sufficient to supply the engine with sufficient fuel to allow the vehicle to be driven to a filling station at which tank 16 may be filled once again.

## Claims

1. An apparatus (14) for use on a vehicle (10) for storing and dispensing a combustible liquid gas comprising a storage tank (16) having an inlet (18) for receiving liquid gas, an outlet for allowing liquid gas to be drawn from said tank (16), and a vent pipe (24) for allowing excess vaporised gas to be withdrawn from said tank (16), characterised in that said vent pipe (24) includes means (26) for oxidising any vented gas into carbon dioxide and water, thereby to prevent vaporised gas being released to atmosphere, and in that the apparatus further comprises an adsorbent filled supplementary storage vessel (42) and means for directing vaporised gas initially to said vessel (42) for adsorption by the adsorbent therein, a vaporiser (36) for vaporising liquid gas and a gas supply pipe (22) for directing gas vaporised by the vaporiser to a unit (12) in which it is to be combusted, and an auxiliary supply pipe (38) for directing vaporised liquid gas from the supplementary storage vessel (42) to the gas supply pipe (22) downstream of the vaporiser (36).

2. An apparatus as claimed in Claim 1 characterised in that said oxidising means (26) comprises a catalytic convertor.

3. An apparatus as claimed in Claim 1 or Claim 2 characterised by the inclusion of a pressure relief valve (40) for preventing vaporised gas being passed to said oxidising unit (26) below a pre-determined pressure.

4. An apparatus as claimed in Claim 1, 2 or 3 characterised in that the adsorbent (43) comprises a high surface area activated carbon or zeolite.

5. An apparatus as claimed in any one of Claims 2 to 4 characterised in that the catalytic unit comprises a platinum or platinum/palladium catalyst.

6. An apparatus as claimed in any one of claims 1 to 5 characterised in that the outlet is positioned for directing gas to an internal combustion engine (12) of the vehicle (10).

## Patentansprüche

1. Einrichtung (14) zur Verwendung auf einem Fahrzeug (10) zum Speichern und Abgeben eines brennbaren Flüssiggases, mit einem Speichertank (16) mit einem Einlaß (18) zur Aufnahme von Flüssiggas, einem Auslaß zum Ermöglichen des Abziehens von Flüssiggas aus dem Tank (16), und einem Entlüfterohr (24) zum Ermöglichen des Abziehens von überschüssigem verdampftem Gas aus dem Tank (16), dadurch gekennzeichnet, daß das Entlüfterohr (24) Mittel (26) zum Oxydieren entlüfteten Gases zu Kohlendioxid und Wasser enthält, um dadurch zu verhindern, daß verdampftes Gas in die Atmosphäre freigesetzt wird, und daß die Einrichtung weiter einen mit Adsorptionsmittel gefüllten Zusatzspeicherbehälter (42) und Mittel zum Leiten vom verdampftem Gas anfänglich in diesen Behälter (42) zur Adsorption durch das darin enthaltene Adsorptionsmittel, einen Verdampfer (36) zum Verdampfen von Flüssiggas, und ein Gaszufuhrrohr (22) zum Leiten von durch den Verdampfer verdampftem Gas in eine Einheit (12), wo es verbrannt wird, und ein Hilfszufuhrrohr (38) zum Leiten von verdampftem Flüssiggas aus dem Zusatzspeicherbehälter (42) in das Gaszufuhrrohr (22) stromab des Verdampfers (36) aufweist.

2. Einrichtung nach Anspruch 1, dadurch gekennzeichnet, daß die Oxydierungsmittel (26) einen katalytischen Reaktor aufweisen.

3. Einrichtung nach Anspruch 1 oder 2, gekennzeichnet durch den Einbau eines Druckminderventils (40), um zu verhindern, daß verdampftes Gas unterhalb eines vorgegebenen Drucks zu der Oxydierungseinheit (26) geleitet wird.

4. Einrichtung nach Anspruch 1, 2 oder 3, dadurch gekennzeichnet, daß das Adsorptionsmittel eine Aktivkohle mit großer wirksamer Oberfläche oder ein Zeolith ist.

5. Einrichtung nach einem der Ansprüche 2 bis 4, dadurch gekennzeichnet, daß die katalytische Einheit einen Platin- oder Platin/Palladium-Katalysator enthält.

6. Einrichtung nach einem der Ansprüche 1 bis 5, dadurch gekennzeichnet, daß der Auslaß so positioniert ist, daß er Gas in eine Brennkraftmaschine (12) mit innerer Verbrennung eines Fahrzeugs (10) leitet.

## Revendications

1. Dispositif (14) destiné à être utilisé sur un véhicule (10) pour le stockage et la distribution d'un gaz combustible liquide, comprenant un réservoir de stockage (16) ayant une entrée (18) pour l'admission de gaz liquide, une sortie pour permettre au gaz liquide d'être prélevé dudit réservoir (16), et une canalisation de ventilation (24) pour permettre au gaz vaporisé en excès d'être évacué dudit réservoir (16), ***caractérisé en ce que*** ladite canalisation de ventilation (24) comprend des moyens (26) pour oxyder tout gaz évacué en dioxyde de carbone et en eau, empêchant ainsi le gaz vaporisé d'être libéré dans l'atmosphère, et ***en ce que*** le dispositif comprend de plus une cuve de stockage supplémentaire (42) remplie d'adsorbant et des moyens pour diriger initialement le gaz vaporisé vers ladite cuve (42) pour adsorption par l'adsorbant dans celle-ci, un vaporiseur (36) pour vaporiser le gaz liquide et une canalisation (22) d'alimentation en gaz pour diriger le gaz vaporisé par le vaporiseur vers une unité (12) dans laquelle il va être brûlé, et une canalisation d'alimentation auxiliaire (38) pour diriger le gaz liquide vaporisé, de la cuve de stockage supplémentaire (42) à la canalisation (22) d'alimentation en gaz en aval du vaporiseur (36).

2. Dispositif selon la Revendication 1, ***caractérisé en ce que*** lesdits moyens d'oxydation (26) comprennent un convertisseur catalytique.

3. Dispositif selon la Revendication 1 ou la Revendication 2, ***caractérisé par*** l'inclusion d'une soupape de sécurité (40) pour empêcher du gaz vaporisé d'être envoyé dans ladite unité d'oxydation (26) en dessous d'une pression prédéterminée.

4. Dispositif selon la Revendication 1, 2 ou 3, ***caractérisé en ce que*** l'adsorbant (43) comprend une zéolithe ou un charbon actif à grande aire de surface.

5. Dispositif selon l'une quelconque des Revendications 2 à 4, ***caractérisé en ce que*** l'unité catalytique comprend un catalyseur au platine ou platine/palladium.

6. Dispositif selon l'une quelconque des Revendications 1 à 5, ***caractérisé en ce que*** la sortie est placée de manière à diriger le gaz vers un moteur (12) à combustion interne du véhicule (10).
